Europäisches Patentamt

European Patent Office

Office européen des brevets

(11) Veröffentlichungsnummer: **0 369 118 B1**

# EUROPÄISCHE PATENTSCHRIFT

(45) Veröffentlichungstag der Patentschrift: **30.03.94**

(51) Int. Cl.⁵: **H02M 3/156**

(21) Anmeldenummer: **89114887.6**

(22) Anmeldetag: **11.08.89**

(54) Verfahren zum Betreiben eines Boostreglers sowie Anordnung.

(30) Priorität: **12.11.88 DE 3838408**

(43) Veröffentlichungstag der Anmeldung:
**23.05.90 Patentblatt 90/21**

(45) Bekanntmachung des Hinweises auf die
Patenterteilung:
**30.03.94 Patentblatt 94/13**

(84) Benannte Vertragsstaaten:
**BE DE FR GB IT NL**

(56) Entgegenhaltungen:
**EP-A- 0 190 110**
**FR-A- 2 456 970**
**US-A- 4 536 700**
**US-A- 4 677 366**

**IEEE TRANSACTIONS ON POWER ELECTRO-
NICS vol. PE-1, no. 3, Juli 1986, New York, US,
Seiten 181-192; R. Redl & N. Sokal: "Near-
Optimum Dynamic Regulation of DC-DC
Converters Using Feed-Forward of Output
Current and Input Voltage with Current-
Mode Control"**

(73) Patentinhaber: **ANT Nachrichtentechnik GmbH
Gerberstrasse 33
D-71522 Backnang(DE)**

(72) Erfinder: **Ohms, Franz, Dipl.-Ing.
Rauteweg 14
D-7163 Oberrot(DE)**

**Beschreibung**

Die Erfindung betrifft ein Verfahren zum Betreiben eines Boostreglers.

Ein Schaltregler mit einer kombinierten Steuerung des Stellgliedes in Abhängigkeit eines sägezahnförmigen Signals und eines schalterstromproportionalen Signals ist aus der FR-24 56 970 bekannt. Neben diesen Signalen, die additiv überlagert werden, wird auch das Fehlersignal aus der Ausgangsspannung des Schaltreglers dem Pulsbreitenmodulator zugeführt. Ein solcher Schaltregler weist eine hohe Stabilität auf, insbesondere gegen Schwingneigung, auch in den Fällen, wo das Tastverhältnis (Schalterleitendzeit zu Auszeit) mehr als die halbe Periodendauer der Schaltfrequenz beträgt.

Aus IEEE Transactions on Power Electronics, Vol. PE-1, No. 3, Juli 1986, Seiten 181-192; R. Redl & N. Sokal: "Near Optimum Dynamic Regulation of DC-DC Converters Using Feed-Forward of output Current and Input Voltage with Current-Mode Control" ist es bekannt dem Pulsbreitenmodulator des Schaltreglers, der als Boostregler aufgebaut ist, ein Stromsteuersignal zuzuführen, welches additiv aus dem Fehlersignal der Schaltregler-Ausgangsspannung und einem "Feed-Forward" Signal gebildet wird. Dieses "Feed-Forward" Signal wird aus der Eingangsspannung und dem Ausgangsstrom des Schaltreglers gewonnen. Die Bewertung dieser Signale bei ihrer Verknüpfung erfolgt in Abhängigkeit des gewünschten Schaltreglertyps.

Aufgabe der Erfindung ist es, das Verfahren, einen bekannten Boostregler zu betreiben, so weiterzubilden, daß Störsignale auf der Eingangsspannung in ihrer Auswirkung auf die Ausgangsspannung des Schaltreglers optimal unterdrückt werden. Diese Aufgabe wird durch die Schritte des Patentanspruchs 1 gelöst. Die weiteren Ansprüche zeigen Boostregler zum Durchführen dieses Verfahrens bzw. Weiterbildungen auf.

Es ist zwar an sich bekannt, das Tastverhältnis in Abhängigkeit von der Eingangsspannung eines Schaltreglers zu ändern, indem man die Amplitude eines sägezahnförmigen Signals in Abhängigkeit der Höhe der Eingangsspannung ändert (Otto Macek, Schaltnetzteile • Motorensteuerungen, Dr. Alfred Hüthig Verlag, Heidelberg 1982, Seiten 101-102); jedoch ergibt sich hieraus keine Anregung wie ein Schaltregler zu betreiben ist, um eine Störspannung auf der Eingangsspannung optimal zu unterdrücken.

Die Erfindung bietet folgende Vorteile:
Wechselanteile auf der Eingangsspannung des Schaltreglers, insbesondere CS (conducted suszeptibility)-Störungen, werden stark gedämpft. Dadurch kann der Siebmittelaufwand im Lastkreis des Schaltreglers sehr klein gehalten werden. Stabilitätsprobleme treten nicht auf. Durch das erfindungsgemäße Betreiben des Schaltreglers ist der arithmethische Mittelwert des Stromes durch die Induktivität des Schaltreglers unabhängig von der Eingangsspannung und damit auch unabhängig von Wechselanteilen auf der Eingangsgleichspannung.

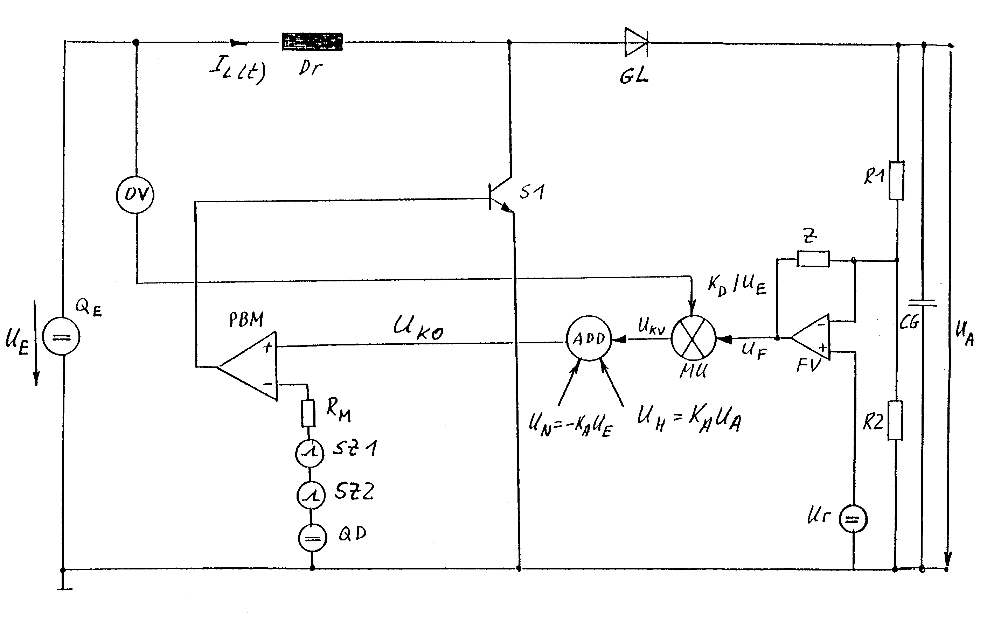

Anhand der Zeichnung wird die Erfindung nun näher erläutert. Die Figur zeigt ein Prinzipschaltbild eines Boostreglers, der nach dem Verfahren der Erfindung betrieben wird.

Der Boostregler (Aufwärtsregler) gemäß der Figur weist eine Eingangsgleichspannungsquelle $Q_E$ auf mit einer Klemmenspannung $U_E$. Zwischen dem Pluspol der Eingangsspannungsquelle $Q_E$ und dem Pluspol des Schaltreglerausganges mit der Ausgangsspannung $U_A$ liegt die Serienschaltung der Schaltreglerinduktivität - Drossel Dr - und des Gleichrichters GL. Der ausgangsseitige Glättungskondensator ist mit CG bezeichnet. Das Schaltreglerstellglied in Form eines Bipolartransistors S1 ist zwischen dem Verbindungspunkt von Drossel Dr mit Gleichrichter GL und dem Minuspol der Eingangsgleichspannungsquelle $Q_E$ angeordnet. Das Stellglied S1 wird über einen Pulsbreitenmodulator PBM in seiner Leitendzeit gesteuert. Für diese Leitendzeit D gilt:

$$D = 1 - U_E/U_A.$$

Sie gibt an für welche Zeit t einer Periode T das Stellglied S1 eingeschaltet ist (D = t/T). Der Pulsbreitenmodulator PBM ist als Komparator ausgebildet. Der invertierende Eingang dieses Komparators ist mit der Serienschaltung, bestehend aus einem Strommeßwiderstand $R_M$ zur Erfassung des Stromes $I_{L(t)}$ durch die Drossel Dr und Regelung in dessen Abhängigkeit, einem ersten Sägezahngenerator SZ1, einem zweiten Sägezahngenerator SZ2 und einer Gleichspannungsquelle QD, beschaltet. Die Quellenspannung QD dieser Gleichspannungsquelle wird größer als eine Hilfsgleichspannung $U_H$ gewählt. Der nichtinvertierende Eingang ist mit einem Addierer ADD beschaltet, der folgende Signale miteinander additiv verknüpft:
- ein Signal $U_N = - K_A \cdot U_E$, wobei $K_A$ eine Proportionalitätskonstante ist,
- eine Hilfsgleichspannung $U_H = K_A \cdot U_A$ und
- das Ausgangssignal $U_{KV}$ eines Multiplizierers MU.

Der Sägezahngenerator SZ1 liefert ein Signal:

$$U_{SK(t)} = \hat{U}_{SK} \cdot t/T$$

Die Maximalamplitude $\hat{U}_{SK}$ wird zu

$$\hat{U}_{SK} = K_A \cdot U_A$$

gewählt und ist durch die Regelung der Ausgangsspannung $U_A$ in etwa konstant. Der Sägezahngenerator SZ2 liefert ein Signal:

$$U_{SV(t)} = \hat{U}_{SV} \cdot t/T$$

Die Maximalamplitude $\hat{U}_{SV}$ wird zu

$$\hat{U}_{SV} = - \frac{T \cdot R_M}{2L} \cdot U_E \quad \text{gewählt.}$$

gewählt.

Der Strommeßwiderstand $R_M$ ist hier ein fiktiver Widerstand, der multipliziert mit dem Strom $I_{L(t)}$ durch die Drossel Dr die stromanteilige Steuerspannung am Pulsbreitenmodulator PBM ergibt. L bezeichnet die Induktivität der Drossel Dr. Die Maximalamplitude $\hat{U}_{SV}$ ist also abhängig vom jeweiligen negativen Wert der variierenden Eingangsspannung $U_E$. Die Komparatorgleichung für den Pulsbreitenmodulator PBM ist gegeben zu:

$$D = \frac{U_{KO} - I_a \cdot R_M}{R_M \cdot \frac{U_E}{L} \cdot T + \hat{U}_{SZ}}$$

In dieser Beziehung ist $U_{KO}$ die Spannung zwischen dem nichtinvertierenden Eingang des Komparators und dem Minuspol des Boostreglers. Für $\hat{U}_{SZ}$ gilt:

$$\hat{U}_{SK} + \hat{U}_{SV}.$$

$I_a$ gibt den minimalen Strom durch die Drossel Dr an. Für den maximalen Drosselstrom $I_e$ gilt:

$$I_e = I_a + \frac{U_E}{L} \cdot D \cdot T$$

Der arithmetische Mittelwert $I_{ar}$, der dem Ausgang zufließt, ergibt sich zu:

$$I_{ar} = \frac{I_a + I_e}{2} (1-D).$$

Um diesen arithmetischen Mittelwert $I_{ar}$ konstant, d.h. insbesondere unabhängig von der variierenden Eingangsspannung $U_E$ zu halten, muß das dem nichtinvertierenden Eingang des Pulsbreitenmodulators PBM zugeführte Signal aus bestimmten Signalanteilen zusammengesetzt sein, die nachfolgend abgeleitet werden. Mit obigen Beziehungen läßt sich der arithmetische Mittelwert $I_{ar}$ folgendermaßen ausdrücken:

3

$$I_{ar} = \frac{U_E}{U_A}\left\{\frac{U_{KO}}{R_M} - \frac{U_A - U_E}{U_A}\left[\frac{U_E \cdot T}{2L} + \frac{\widehat{U}_{SZ}}{R_M}\right]\right\}$$

mit $\widehat{U}_{SZ} = K_A \cdot U_A + K_E \cdot U_E$ folgt:

$$I_{ar} = \frac{U_E}{U_A}\left\{\frac{U_{KO}}{R_M} - \frac{U_A - U_E}{U_A}\left[\frac{U_E \cdot T}{2L} + \frac{K_A \cdot U_A}{R_M} + \frac{K_E \cdot U_E}{R_M}\right]\right\}$$

Für $K_E = -\dfrac{T \cdot R_M}{2L}$ gilt:

$$I_{ar} = \frac{U_E}{U_A}\left\{\frac{U_{KO}}{R_M} - K_A \frac{U_A}{R_M} + K_A \frac{U_E}{R_M}\right\}$$

Mit $U_{KO} = U_{K1} + K_1 U_E$ folgt:

$$I_{ar} = \frac{U_E}{U_A}\left\{\frac{U_{K1}}{R_M} + \frac{K_1 U_E}{R_M} - K_A \frac{U_A}{R_M} + K_A \frac{U_E}{R_M}\right\}$$

Für $K_1 = -K_A$ wird:

$$I_{ar} = \frac{U_E}{U_A}\left\{\frac{U_{K1}}{R_M} - K_A \frac{U_A}{R_M}\right\}$$

Mit $U_{K1} = U_H + U_{KV}$ folgt:

$$I_{ar} = \frac{U_E}{U_A}\left\{\frac{U_{KV}}{R_M} + \frac{U_H}{R_M} - K_A \frac{U_A}{R_M}\right\}$$

Wenn $U_H = K_A \cdot U_A$ gewählt wird, gilt:

$$I_{ar} = \frac{U_E}{U_A} \cdot \frac{U_{KV}}{R_M}$$

$$\text{Mit } U_{KV} = U_F \frac{K_D}{U_E},$$

wobei $K_D$ eine Proportionalitätskonstante und $U_F$ das verstärkte Fehlersignal der Ausgangsspannung $U_A$ darstellt, folgt:

$$I_{ar} = \frac{K_0 \cdot U_R}{U_A \cdot R_M} \neq f(U_E)$$

Mit der Wahl der Konstanten und der Signale nach obigen Beziehungen, läßt sich also erreichen, daß der arithmetische Mittelwert $I_{ar}$, der dem Ausgang zufließt, unabhängig von der Eingangsspannung $U_E$ wird und damit auch von Störungen auf der Eingangsspannung $U_E$. $K_A$ als einziger noch freier Parameter wird nun so gewählt, daß der Schaltregler stabil ist.

Die Bedingung für die Stabilität lautet:

$$\hat{U}_{SZ} > \frac{R_M \cdot T}{L} (U_A - 2U_E)$$

wenn

$$K_E = - \frac{T \cdot R_M}{2L}$$

gewählt wird,
muß, da $\hat{U}_{SZ} = K_A \cdot U_A + K_E \cdot U_E$ ist,

$$U_A \cdot K_A \geq \frac{R_M \cdot T}{L} (U_A - 2U_{Emin}) + \frac{T \cdot R_M}{2L} \cdot U_{Emin}$$

Damit wird:

$$K_A \geq \frac{R_M \cdot T}{L} \left(1 - \frac{3}{2} \frac{U_{Emin}}{U_A}\right)$$

Aus der Figur ist ersichtlich, mit welchen Signalen und in welcher Signalzusammensetzung der nichtinvertierende Eingang des Pulsbreitenmodulators PBM beaufschlagt werden muß. Demnach werden einem Addierer ADD, dessen Ausgang mit dem nichtinvertierenden Eingang des Pulsbreitenmodulators PBM verbunden ist, eingangsseitig folgende Signale zugeführt: $U_N = - K_A \cdot U_E$, also ein Signal proportional zum negativen Wert der Eingangsspannung $U_E$, $U_H = K_A \cdot U_A$, eine Hilfsgleichspannung, die in etwa konstant ist und das Signal

$$U_{KV} = \frac{K_D}{U_E} \cdot U_F,$$

welches umgekehrt proportional zur Eingangsspannung $U_E$ und proportional zum verstärkten Fehlersignal $U_F$ ist. Das Signal $U_{KV}$ wird über einen Multiplizierer MU gewonnen, dem die Signale $U_F$ und $K_D/U_E$ zugeführt sind. Das Zwischensignal $U_{K1}$ setzt sich folgendermaßen zusammen:

$U_{K1} = U_{KV} + U_H.$

Es liegt nur dann explizit vor, wenn die Signaladdition in zwei Stufen ausgeführt wird. Das Signal $K_D/U_E$ läßt sich auf einfachste Weise aus der Eingangsspannung $U_E$ mittels eines Dividierers DV und Bewertung des Divisionssignals mit dem Faktor $K_D$ ableiten. Das Fehlersignal $U_F$ wird in üblicher Weise mittels eines Fehlerverstärkers FV gewonnen, der über einen Spannungsteiler R1, R2 ein zur Ausgangsspannung $U_A$ proportionales Signal mit einer Referenzgleichspannung Ur vergleicht. Im Gegenkopplungszweig dieses Fehlerverstärkers FV liegt bekanntlich ein Gegenkopplungsnetzwerk mit dem komplexen Widerstand Z.
Zur Gewinnung des drosselstromproportionalen Signals wird beispielsweise ein Stromwandler eingesetzt, dessen Primärwicklung zwischen Pluspol der Eingangsgleichspannungsquelle $Q_E$ und Drossel Dr angeordnet ist und dessen Sekundärwicklung über einen Gleichrichter mit einem Strommeßwiderstand beschaltet ist. Die Hilfsspannung $U_H$ kann direkt von der Ausgangsspannung $U_A$, beispielsweise über einen Spannungsteiler, abgeleitet werden. Die Amplituden der Sägezahnsignale sind ebenso auf einfache Weise aus der Eingangs- bzw. Ausgangsspannung ableitbar.

**Patentansprüche**

1. Verfahren zum Betreiben eines Boostreglers (Aufwärtsregler), dessen Stellglied (S1) über einen Pulsbreitenmodulator (PBM) gesteuert wird mit folgenden Maßnahmen:
   - dem Referenzeingang des Pulsbreitenmodulators (PBM) wird ein Summensignal zugeführt, welches sich aus folgenden Signalen zusammensetzt:
   a) einem sägezahnförmigen Signal ($U_{SK}$) mit in etwa konstanter Maximalamplitude, die proportional zur Höhe der Ausgangsspannung ($U_A$) gewählt ist,
   b) einem zum Strom ($I_L$) durch die Schaltreglerinduktivität (L) abhängigen Signal,
   c) einem weiteren sägezahnförmigen Signal ($U_{SV}$), dessen Maximalamplitude in Abhängigkeit vom negativen Wert der Eingangsspannung ($U_E$) des Boostreglers gewählt ist,
   - dem Vergleichseingang des Pulsbreitenmodulators (PBM) wird ein Signal zugeführt, welches aus einer multiplikativen Verknüpfung des Fehlersignals ($U_F$) der Ausgangsspannung ($U_A$) mit einem zur Eingangsspannung ($U_E$) proportionalen Signal hervorgeht und dem eine Bewertung ($U_H$, $U_N$) in Abhängigkeit der Ausgangsspannung ($U_A$) und der Eingangsspannung ($U_E$) aufaddiert wird.

2. Boostregler zum Durchführen des Verfahrens nach Anspruch 1, dadurch gekennzeichnet, daß der das Stellglied (S1) steuernde Pulsbreitenmodulator (PBM) in Form eines Komparators aufgebaut ist und folgendermaßen beschaltet ist:
   - der invertierende Eingang dieses Komparators (PBM) ist an die Serienschaltung bestehend aus
   d) einem Netzwerk ($R_M$) zur Erfassung eines zum Strom ($I_L$) durch die Schaltreglerinduktivität (L) proportionalen Signals,
   e) einem ersten Sägezahngenerator (SZ1) mit einer in etwa konstanten zur Höhe der Ausgangsspannung ($U_A$) proportional gewählten Maximalamplitude ($U_{SK}$),
   f) einem zweiten Sägezahngenerator (SZ1) mit einer Maximalamplitude ($U_{SV}$) proportional zum jeweiligen negativen Wert der Eingangsspannung ($U_E$)

angeschlossen,

der nichtinvertierende Eingang des Komparators (PBM) ist mit einem Addierer (ADD) beschaltet, dem folgende Signale zuführbar sind:

g) ein zum negativen Wert der Eingangsspannung ($U_E$) proportionales Signal ($U_N$),

h) eine in etwa konstante Hilfsgleichspannung ($U_H$), deren Amplitude proportional zur Höhe der Ausgangsspannung ($U_A$) gewählt ist,

i) ein Ausgangssignal ($U_{KV}$) eines Multiplizierers (MU) mittels dessen das verstärkte Fehlersignal ($U_F$) der Ausgangsspannung ($U_A$) und ein zur Eingangsspannung ($U_E$) umgekehrt proportionales Signal verknüpfbar ist.

3. Boostregler nach Anspruch 2, dadurch gekennzeichnet, daß zu den Sägezahngeneratoren (SZ1, SZ2) und dem Netzwerk ($R_M$) zur Stromerfassung eine Gleichspannungsquelle (QD) in Serie geschaltet ist, deren Quellenspannung ($U_{QD}$) größer als die Hilfsgleichspannung ($U_H$) ist.

4. Boostregler nach einem der Ansprüche 2 oder 3, dadurch gekennzeichnet, daß die Hilfsgleichspannung ($U_H$) aus der Schaltreglerausgangsspannung ($U_A$) abgeleitet ist.

5. Boostregler nach Anspruch 2, dadurch gekennzeichnet, daß die beiden Sägezahngeneratoren (SZ1, SZ2) zu einer Signalquelle zusammengefaßt sind.

## Claims

1. A method of operating a boost regulator (upward regulator) whose setting member (S1) is controlled by way of a pulse width modulator (PBM), comprising the following measures:
   - the reference input of the pulse width modulator (PBM) receives a sum signal which is composed of the following signals:
     (a) a sawtooth-shaped signal ($U_{SK}$) having an approximately constant maximum amplitude which is selected to be proportional to the magnitude of the output voltage ($U_A$);
     (b) a signal that is a function of the current ($I_L$) through the switching regulator inductance (L);
     (c) a further sawtooth-shaped signal ($U_{SV}$) whose maximum amplitude is selected as a function of the negative value of the input voltage ($U_A$) of the boost regulator;
   - the comparison input of the pulse width modulator (PBM) receives a signal that is the result of a multiplicative linkage of the error signal ($U_F$) of the output voltage ($U_A$) with a signal proportional to the input voltage ($U_E$) to which is added a weighting ($U_H$, $U_N$) as a function of the output voltage ($U_A$) and the input voltage ($U_E$).

2. A boost regulator for implementing the method according to claim 1, characterised in that the pulse width modulator (PBM) controlling the setting member (S1) is constructed in the form of a comparator and is connected as follows:
   - the inverting input of this comparator (PBM) is connected with a series connection composed of:
     (d) a network ($R_M$) for detecting a signal proportional to the current (IL) through the switching regulator inductance (L);
     (e) a first sawtooth generator (SZ1) having an approximately constant maximum amplitude ($U_{SK}$) that is selected to be proportional to the magnitude of the output voltage ($U_A$);
     (f) a second sawtooth generator (SZ1) [sic] having a maximum amplitude ($U_{SV}$) which is proportional to the respective negative value of the input voltage ($U_E$);
   - the non-inverting input of the comparator (PBM) is connected with an adder (ADD) which is able to receive the following signals:
     (g) a signal ($U_N$) proportional to the negative value of the input voltage ($U_E$);
     (h) an approximately constant auxiliary direct voltage ($U_H$) whose amplitude is selected to be proportional to the magnitude of the output voltage ($U_A$);
     (i) an output signal ($U_{KV}$) of a multiplier (MU) by means of which the amplified error signal ($U_F$) of the output voltage ($U_A$) can be linked with a signal that is inversely proportional to the input voltage ($U_E$).

3. A boost regulator according to claim 2, characterised in that the sawtooth generators (SZ1, SZ2) and the current detecting network ($R_M$) are connected in series with a direct voltage source (QD) whose source voltage ($U_{QD}$) is greater than the auxiliary direct voltage ($U_H$).

**4.** A boost regulator according to one of claims 2 or 3, characterised in that the auxiliary voltage ($U_H$) is derived from the switching regulator output voltage ($U_A$).

**5.** A boost regulator according to claim 2, characterised in that the two sawtooth generators (SZ1, SZ2) are combined into a signal source.

**Revendications**

**1.** Procédé de mise en oeuvre d'un régulateur par précompensation (régulateur automatique de gain par précompensation) dont l'élément réglant (S1) est commandé par l'intermédiaire d'un modulateur de largeur d'impulsion (PBM), procédé comportant les mesures suivantes:
- à l'entrée de référence du modulateur de largeur d'impulsion (PBM), on amène un signal de sommation qui se compose des signaux suivants:
  a) un signal en forme de dents de scie ($U_{SK}$) d'une amplitude maximale approximativement constante et que l'on choisit proportionnelle à la valeur de la tension de sortie ($U_A$),
  c) un signal fonction de l'intensité ($I_L$) qui passe dans l'inductance (L) du régulateur par commutation.
  d) un autre signal en forme de dents de scie ($U_{SV}$) dont l'amplitude maximale est choisie en fonction de la valeur négative de la tension d'entrée ($U_E$) du régulateur automatique de gain par précompensation,
- à l'entrée de comparaison du modulateur de largeur d'impulsion (PBM), on amène un signal qui résulte d'une liaison logique multiplicative du signal d'erreur ($U_F$) de la tension de sortie ($U_A$) avec un signal proportionnel à la tension d'entrée ($U_E$) et auquel on ajoute une pondération ($U_H$, $U_N$) en fonction de la tension de sortie ($U_A$) et de la tension d'entrée ($U_E$).

**2.** Régulateur automatique de gain par précompensation pour la mise en oeuvre du procédé selon la revendication 1, caractérisé par le fait que le modulateur de largeur d'impulsion (PBM), qui commande l'élément réglant (S1), est conçu sous forme d'un comparateur et qu'il est mis en circuit de la façon suivante:
- l'entrée de changement de signe de ce comparateur (PBM) est reliée au circuit de série constitué de:
  d) un réseau ($R_M$) pour la saisie d'un signal proportionnel à l'intensité ($I_L$) passant dans l'inductance (L) du régulateur par commutation,
  e) un premier générateur de dents de scie (SZ1) dont on choisit l'amplitude maximale ($U_{SK}$) à peu près constante et proportionnelle à la valeur de la tension de sortie ($U_A$),
  f) un second générateur de dents de scie (SZ2) d'une amplitude maximale ($U_{SV}$) proportionnelle à la valeur négative respective de la tension d'entrée ($U_E$),
- l'entrée de non changement de signe du comparateur (PBM) est mise en circuit avec un additionneur (ADD) auquel on peut amener les signaux suivants:
  g) un signal ($U_N$) proportionnel à la valeur négative de la tension d'entrée ($U_E$),
  h) une tension continue auxiliaire à peu près constante ($U_H$) dont on choisit l'amplitude proportionnelle à la valeur de la tension de sortie ($U_A$),
  i) un signal de sortie ($U_{KV}$) d'un multiplicateur (MU) au moyen duquel on peut relier logiquement le signal d'erreur ($U_F$), amplifié, de la tension de sortie ($U_A$) et un signal inversement proportionnel à la tension d'entrée ($U_E$).

**3.** Régulateur automatique de gain par précompensation selon la revendication 2, caractérisé par le fait qu'avec les générateurs de dents de scie (SZ1, SZ2) et avec le réseau ($R_M$) de saisie de l'intensité, on met en série une source de tension continue (QD) dont la tension ($U_{QD}$) est supérieure à la tension continue auxiliaire ($U_H$).

**4.** Régulateur automatique de gain par précompensation selon l'une des revendications 2 ou 3, caractérisé par le fait que la tension continue auxiliaire ($U_H$) est dérivée de la tension de sortie ($U_A$) du régulateur par commutation.

**5.** Régulateur automatique de gain par précompensation selon la revendication 2, caractérisé par le fait que les deux générateurs de dents de scie (SZ1, SZ2) sont regroupés pour donner une source de signaux.